# DEMANDE DE BREVET EUROPEEN

(11) **EP 4 312 125 A1**
(43) Date de publication de la demande: **31.01.2024**
(21) Numéro de dépôt: 22306125.0
(22) Date de dépôt: 28.07.2022
(51) Int. Cl.: G06F 11/14, G06F 11/00

(54) **PRÉDICTION D'UNE ANOMALIE DE RESSOURCE POUR LA PROGRAMMATION D'UN POINT DE SAUVEGARDE**

(71) Demandeur: BULL SAS, 78340 Les Clayes-Sous-Bois (FR)
(72) Inventeur: GERPHAGNON, Jean-Olivier, 38450 Vif (FR)
(74) Mandataire: Cabinet Camus Lebkiri

(57) **Abrégé**

Un aspect de l'invention concerne un procédé (100), mis en œuvre par ordinateur, de programmation d'un point de sauvegarde d'au moins une application exécutée sur une infrastructure informatique, l'infrastructure informatique comprenant une pluralité de ressources allouées à l'exécution de l'application, le procédé (100) comportant les étapes suivantes :
- Détermination (101) d'une date de défaillance de l'application en fonction d'une prédiction d'une anomalie d'au moins une ressource de la pluralité de ressources ;
- Programmation (102) du point de sauvegarde en fonction de la date de défaillance.

## Description

### DOMAINE TECHNIQUE DE L'INVENTION

Le domaine technique de l'invention est celui de la gestion d'erreurs d'exécution d'applications sur une infrastructure informatique distribuée.

La présente invention concerne un procédé de programmation d'un point de sauvegarde pour une application exécutée sur une infrastructure informatique.

### ARRIERE-PLAN TECHNOLOGIQUE DE L'INVENTION

Dans un contexte de calcul haute performance (HPC ou « high performance computing » en anglais), des applications sont distribuées et exécutées sur un grand nombre de ressources de calcul d'un calculateur HPC, appelées nœuds. L'exécution d'une application, souvent très gourmande en ressources, peut durer de quelques secondes à plusieurs semaines ou mois sur chacun des nœuds qui lui sont alloués et n'est pas exempte d'échecs, appelées défaillances, dues à une anomalie de ressource.

Afin d'éviter la perte de données et des calculs réalisés avant la défaillance, des mécanismes de sauvegarde, appelés points de sauvegarde ou « checkpoint » en anglais, existent et permettent de sauvegarder sur une solution de stockage local ou distant l'ensemble des données nécessaires à l'application à un instant précis de son exécution, pour chacun des nœuds. En d'autres termes, le point de sauvegarde peut être interprété comme étant une prise d'image de l'état de l'application à un instant donné. Ainsi, il est possible de restaurer l'application défaillante à une étape avancée, en chargeant les données sauvegardées, plutôt que de redémarrer l'exécution de l'application depuis le début (« restart » en anglais). Ce type de mécanisme est connu sous le nom de C/R pour « Checkpoint/Restart » en anglais. Le C/R peut être implémenté directement dans l'application elle-même ou au niveau du système d'exploitation (en anglais, operating system - OS).

Le mécanisme de C/R est très intéressant, en particulier pour des applications lourdes dont le temps d'exécution est long ou le nombre de ressources nécessaires très important (plusieurs centaines ou milliers de nœuds). Cependant, ce mécanisme impacte fortement les performances d'exécution de l'application dans un contexte HPC. En effet, le C/R est classiquement implémenté pour s'exécuter à plusieurs instants durant l'exécution de l'application sur le nœud, par exemple à intervalles réguliers. Or, il s'avère que le C/R génère des flux de données importants, en particulier pour l'écriture de l'état de l'application sur un stockage distant, et inversement lors du redémarrage de l'application pour la récupération des données et la restauration du calcul. Dans les faits, le mécanisme de C/R n'est pas tant utilisé car l'avantage procuré, c'est-à-dire permettre le redémarrage à une étape avancée de l'application défaillante, est souvent perdu à cause du temps nécessaire à la mise en œuvre du point de sauvegarde et à la restauration du calcul, d'autant plus qu'un point de sauvegarde s'avère inutile s'il ne donne pas lieu à une restauration.

Considérons, par exemple, une application distribuée sur 100 nœuds pour une durée de 24 heures avec un mécanisme de point de sauvegarde déclenché toutes les heures, l'application utilisant 64GB de mémoire par nœud. Dans ce cas, il sera nécessaire, au pire des cas, de sauvegarder 100 x 64GB = 6.4TB de données toutes les heures. Le transfert et le stockage d'un tel volume de données, qui sont une charge non utile pour le calcul à proprement parler, représentent de plus une consommation énergétique et de bande passante ainsi qu'une empreinte carbone supplémentaire non nécessaires si le checkpoint n'est pas utilisé, c'est-à-dire si l'application s'exécute sans défaillance. En outre, puisque cette sauvegarde est réalisée de manière fréquentielle toutes les heures, les données à sauvegarder doivent, à chaque fois, être lues, transférées puis écrites. Réciproquement, lorsqu'une défaillance a lieu, il faut relire, retransférer et réécrire en mémoire les données pour que l'application puisse reprendre son exécution à partir du dernier point de sauvegarde. Ce mécanisme C/R, bien que très utile, s'avère donc coûteux en temps au regard des temps nécessaires à la lecture, l'écriture et le transfert de tels volumes des données. On appelle effet de bords ces mécanismes utilisant des ressources annexes aux nœuds de calcul permettant la sauvegarde des données d'exécution et la reprise d'une application défaillante.

Il existe donc un besoin de pouvoir relancer une application après une défaillance, sans les inconvénients de l'état de l'art, c'est-à-dire en impactant moins la performance d'exécution de l'application distribuée.

### RESUME DE L'INVENTION

L'invention offre une solution aux problèmes évoqués précédemment, en permettant le déclenchement d'un point de sauvegarde à une date correspondant à la prédiction d'une défaillance. Le mécanisme de C/R devient donc un mécanisme événementiel et non plus un mécanisme fréquentiel, tel qu'il existe jusqu'alors.

Un premier aspect de l'invention concerne un procédé mis en œuvre par ordinateur, de programmation d'un point de sauvegarde d'au moins une application exécutée sur une infrastructure informatique, l'infrastructure informatique comprenant une pluralité de ressources allouées à l'exécution de l'application, le procédé comportant les étapes suivantes :
- Détermination d'une date de défaillance de l'application en fonction d'une prédiction d'une anomalie d'au moins une ressource de la pluralité de ressources ;
- Programmation du point de sauvegarde en fonction de la date de défaillance.

Grâce à l'invention, il est possible de mettre en œuvre un mécanisme de point de sauvegarde dont l'impact sur les performances de l'application sera moindre, comparativement à un mécanisme C/R fréquentiel. En effet, le procédé selon l'invention permet de ne déclencher le point de sauvegarde que lorsqu'une défaillance est prédite, et non de façon systématique, par exemple à intervalle régulier. Il s'agit donc d'un mécanisme C/R événementiel, basé sur un événement lié à une prédiction de défaillance, et non fréquentiel. Ainsi, le mécanisme C/R est avantageusement moins fréquent tandis que la probabilité de l'utiliser pour restaurer le calcul, est bien plus importante. Le mécanisme C/R devient alors plus souvent utile et est moins coûteux que dans sa version fréquentielle. L'invention permet également de réduire les effets de bords induits par le mécanisme C/R.

Outre les caractéristiques qui viennent d'être évoquées dans le paragraphe précédent, le procédé selon le premier aspect de l'invention peut présenter une ou plusieurs caractéristiques complémentaires parmi les suivantes, considérées individuellement ou selon toutes les combinaisons techniquement possibles.

Dans un mode de réalisation, au moins un identifiant de ressource est en outre déterminé à l'étape de détermination de la date de défaillance, chaque identifiant de ressource identifiant une ressource de la pluralité de ressources à l'origine de l'anomalie, et dans lequel le point de sauvegarde est en outre programmé en fonction de l'identifiant de ressource déterminé.

Grâce à ce mode de réalisation, il est possible d'identifier la ou les ressources responsables de la défaillance de l'application et de déterminer si l'anomalie de ressource nécessite le déclenchement d'un point de sauvegarde ou non. En effet, il n'est pas nécessaire de déclencher un point de sauvegarde si la ressource identifiée n'est pas indispensable, par exemple parce qu'elle existe en plusieurs exemplaires sur le nœud de calcul où elle se trouve, tels deux ports Ethernet identiques configurés en redondance.

Dans un mode de réalisation compatible avec le mode de réalisation précédent, un indice de confiance de prédiction est en outre déterminé à l'étape de détermination de la date de défaillance, et dans lequel le point de sauvegarde est en outre programmé en fonction de l'indice de confiance déterminé.

Grâce à ce mode de réalisation, il est possible de discriminer un faux positif d'une défaillance effective.

Dans un mode de réalisation compatible avec les modes de réalisation précédents, le point de sauvegarde est programmé pour se déclencher à un instant précédant la date de défaillance, l'instant précédant la date de défaillance d'au moins une durée prédéterminée.

Grâce à ce mode de réalisation, il est possible de déclencher le point de sauvegarde peu de temps avant l'apparition de la défaillance, puis de reprendre les calculs depuis ce point de sauvegarde. Ainsi, l'intervalle de temps entre le point de sauvegarde et la défaillance est minimal.

Dans un mode de réalisation compatible avec les modes de réalisation précédents, l'anomalie est prédite en fonction de données de ressources collectées via des sondes avant l'exécution de l'application.

Grâce à ce mode de réalisation, il est possible d'anticiper une défaillance d'une application qui n'est pas encore en cours de calcul. Cela permet par exemple de retarder ou anticiper l'exécution d'une application critique pour laquelle on souhaite éviter l'allocation sur des ressources pouvant être sujettes à pannes. De ce fait, le point de sauvegarde ne sera pas nécessaire.

Dans un mode de réalisation compatible avec les modes de réalisation précédents, l'anomalie est prédite en fonction de données de ressources collectées via des sondes au cours de l'exécution de l'application.

Grâce à ce mode de réalisation, il est possible de surveiller en continu l'activité des ressources pour prédire l'anomalie au cours de l'exécution de l'application. En particulier, il est possible d'utiliser des mécanismes d'apprentissage automatique, tels que l'apprentissage par renforcement pour la prédiction de l'anomalie.

Dans un mode de réalisation compatible avec les modes de réalisation précédents, la prédiction de l'anomalie est mise en œuvre par une analyse d'une tendance d'occurrences d'anomalies, l'analyse étant une analyse statistique ou une analyse par apprentissage machine.

Grâce à ce mode de réalisation, il est possible d'estimer une tendance statistique des erreurs d'une ou plusieurs ressources et de prédire une prochaine anomalie à partir de l'extrapolation de cette tendance.

Dans un mode de réalisation compatible avec les modes de réalisation précédents, l'application comprend une pluralité de tâches d'exécution et l'anomalie est prédite durant l'exécution d'au moins une tâche d'exécution parmi la pluralité de tâches d'exécutions.

Dans un mode de réalisation compatible avec le mode de réalisation précédent, le point de sauvegarde est programmé pour se déclencher à la fin de l'exécution de la tâche d'exécution précédant la tâche d'exécution de la pluralité de tâches d'exécution durant laquelle l'anomalie est prédite.

Grâce à ces modes de réalisation, il est possible de déclencher le point de sauvegarde durant une étape précise de l'exécution de l'application. Préférentiellement, il est possible de déclencher le point de sauvegarde durant la tâche d'exécution précédant la tâche d'exécution où la défaillance est prédite, afin de réduire le temps de calcul perdu par la défaillance. Avantageusement, il est possible de déclencher le point de sauvegarde durant une tâche d'exécution nécessitant le moins de données d'exécution afin de réduire le volume de données sauvegardées et donc de réduire le temps de mise en œuvre du point de sauvegarde.

Dans un mode de réalisation compatible avec les modes de réalisation précédents, après déclenchement du point de sauvegarde, un point de sauvegarde fréquentiel est programmé pour se déclencher à une pluralité d'instants de sauvegarde.

Grâce à ce mode de réalisation, il est possible de mettre en œuvre un point de sauvegarde fréquentiel dans le cas où la défaillance aurait lieu plus tard qu'à la date prédite. L'intérêt est donc de déclencher le point de sauvegarde au plus proche de la date de défaillance afin de réduire le temps de calcul perdu à cause de la défaillance. Il s'agit donc d'un modèle fréquentiel mis en œuvre sur un laps de temps bien plus réduit que le temps total d'exécution de l'application.

Un deuxième aspect de l'invention concerne une infrastructure informatique comprenant une pluralité de ressources allouées à l'exécution d'une application, et caractérisée en ce qu'elle comprend :
- Un module de prédiction configuré pour mettre en œuvre l'étape de détermination d'une date de défaillance de l'application du procédé selon le premier aspect de l'invention ;
- Un module de programmation au moins configuré pour mettre en œuvre l'étape de programmation du point de sauvegarde du procédé selon le premier aspect de l'invention, via un gestionnaire de point de sauvegarde de l'infrastructure informatique, un gestionnaire de ressources de l'infrastructure informatique ou l'application.

Dans un mode de réalisation, le module de programmation est en outre configuré pour mettre en œuvre la programmation du point de sauvegarde fréquentiel du procédé selon le premier aspect de l'invention.

Un troisième aspect de l'invention concerne un produit-programme d'ordinateur comprenant des instructions qui, quand le programme est exécuté par un ordinateur, conduisent celui-ci à mettre en œuvre les étapes du procédé selon le premier aspect de l'invention.

Un quatrième aspect de l'invention concerne un support d'enregistrement lisible par ordinateur comprenant des instructions qui, lorsqu'elles sont exécutées par un ordinateur, conduisent celui-ci à mettre en œuvre les étapes du procédé selon le premier aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est une représentation schématique du procédé selon l'invention et de l'enchaînement des étapes qu'il comporte.
- La figure 2 est une représentation schématique d'une infrastructure informatique selon l'invention.

### DESCRIPTION DETAILLEE

Sauf précision contraire, un même élément apparaissant sur des figures différentes présente une référence unique.

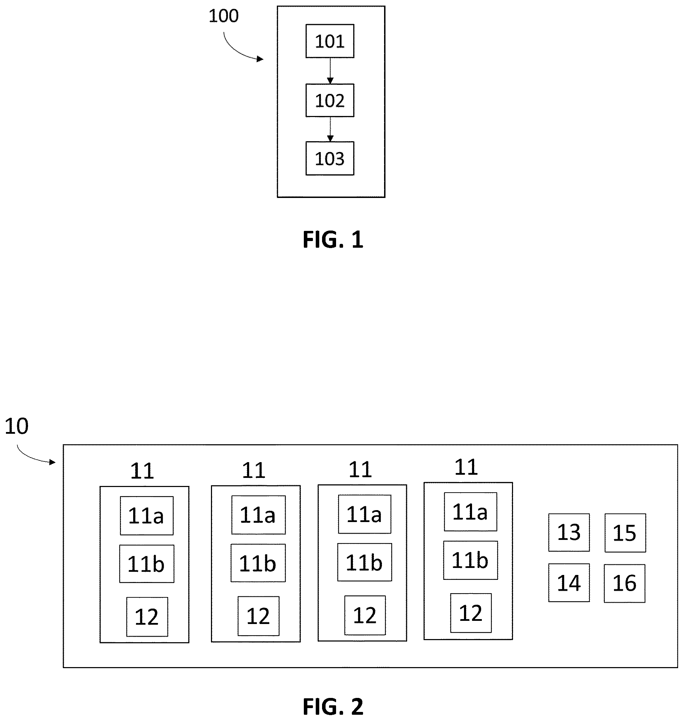

Un premier aspect de l'invention concerne un procédé de programmation d'un point de sauvegarde, mis en œuvre par un ordinateur. La figure 1 illustre l'enchaînement des étapes du procédé selon l'invention. Le procédé 100 comporte deux étapes principales, numérotées 101 et 102, ainsi qu'une étape optionnelle numérotée 103.

Le point de sauvegarde permet de sauvegarder des données d'exécution d'au moins une application 12 exécutée sur une infrastructure informatique. La figure 2 est un schéma qui représente l'infrastructure informatique 10.

L'infrastructure informatique 10 est de préférence une infrastructure de calcul haute performance, dite HPC, comprenant une pluralité de ressources communiquant entre elles via un réseau. Les ressources sont regroupées sur un ou plusieurs nœuds 11 de calcul, chacun étant adapté pour exécuter l'application 12. Chaque nœud 11 comprend comme ressources au moins un processeur 11a et une mémoire volatile 11b. Il peut également comprendre d'autres types de ressources, telles qu'une mémoire non-volatile, une carte graphique, un module de connexion filaire ou non-filaire, un ou plusieurs accélérateurs de calcul, par exemple des GPU (en anglais, « Graphical Power Unit »), etc. Alternativement, chaque nœud 11 peut être considéré comme une des ressources de la pluralité de ressources et chaque nœud 11 peut comporter lui-même des ressources de la pluralité de ressources.

Dans un contexte HPC, l'application 12 à exécuter est mise en œuvre sur au moins un nœud 11 ou distribuée sur plusieurs nœuds 11 de l'infrastructure informatique 10. Une partie ou la totalité des ressources dudit nœud 11 sont ainsi allouées à l'exécution de l'application 12 sur ledit nœud 11.

L'étape 101 du procédé 100 est une étape de détermination d'une date de défaillance de l'application 12. On entend par « défaillance de l'application 12 », un arrêt de l'exécution de l'application 12 sur un ou plusieurs nœuds 11 de l'infrastructure informatique 10. La date de défaillance de l'application 12 est donc la date à laquelle la défaillance de l'application 12 a lieu. Une telle date peut se trouver sous la forme d'un horodatage, par exemple comprenant des secondes, des minutes, une heure, un jour, un mois et une année ou toute combinaison, ou peut se trouver sous la forme d'une durée à partir de la détection de la défaillance de l'application 12, la durée pouvant être exprimée en secondes, minutes, heures, jours, mois, années ou toute combinaison.

La date de défaillance de l'application 12 est calculée à partir d'une prédiction d'une anomalie d'au moins une ressource de la pluralité de ressources allouées à l'exécution de l'application 12. On entend par « anomalie d'une ressource », un dysfonctionnement de la ressource, qui s'éloigne de son fonctionnement nominal, et qui entraîne une erreur lors de l'utilisation de ladite ressource par une application 12 et donc la défaillance de ladite application 12. Par exemple, il s'agit d'une erreur SMART, d'une erreur réseau, telle qu'une erreur de transmission sur un port InfiniBand, d'une erreur en lecture et/ou écriture d'une mémoire. La défaillance peut être une défaillance partielle ou totale d'un composant, par exemple causée par une surchauffe dudit composant, ou liée à une autre cause non répertoriée ici.

Préférentiellement, la date de défaillance est estimée au moyen d'un programme de prédiction d'anomalies de ressource, à partir de données de fonctionnement des ressources de la pluralité de ressources allouées à l'exécution de l'application 12. En particulier, le programme de prédiction est configuré pour collecter les données de fonctionnement des ressources durant des phases de fonctionnement normal, c'est-à-dire sans anomalie de ressource, et durant des phases de fonctionnement anormal, c'est-à-dire avec anomalie de ressource. Ces données sont collectées au moyen de sondes, placées sur l'infrastructure informatique 10. Il peut s'agir de sondes logicielles, par exemple pour mesurer un flux de données, une vitesse de calcul d'un processeur, une vitesse de lecture et/ou écriture d'une mémoire, un taux de saturation d'une mémoire, etc. Il peut également s'agir de sondes matérielles, par exemple pour mesurer une température d'un processeur, un débit d'eau dans le système de refroidissement dans un nœud 11, etc. Le programme de prédiction est par exemple le programme ATOS Cognitive Data Center^{™} ou le programme IBM Watson^{™}.

Le programme de prédiction détermine, sur la base des données de ressources collectées, une date d'anomalie, qui est une date à laquelle la survenue de l'anomalie de ressource est prédite. Préférentiellement, la date de défaillance est la date d'anomalie.

La collecte des données des ressources au moyen des sondes est effectuée durant l'exécution de l'application 12 et/ou avant l'exécution de l'application 12, par exemple durant l'exécution d'autres applications 12. L'intérêt de collecter les données de ressources avant l'exécution de l'application 12 est de collecter les données de ressources durant des phases de fonctionnement anormal. Il s'agit donc de données associées à des anomalies de ressources qui sont ainsi analysées pour déterminer des tendances d'occurrences de l'anomalie de ressource. La collecte peut également concerner un ou plusieurs journaux d'événements (en anglais « log ») et/ou des indices de performance tels que les indices de Fiabilité, Maintenabilité et Disponibilité (en anglais Reliability, Availability and Serviceability - RAS). La collecte peut être mise en œuvre au moyen d'un programme de collecte tel que Prometheus^{™} ou Elasticsearch^{™}. La collecte peut, en outre, être mise en œuvre au travers d'un protocole SNMP (en anglais « Simple Network Management Protocol »).

Les données de ressources collectées sont stockées sur une mémoire de stockage de données 15, qui est une mémoire non-volatile. La mémoire de stockage de données peut être comprise dans l'infrastructure informatique 10 ou peut être externe à l'infrastructure informatique 10.

En d'autres termes, le programme de prédiction sert à déterminer des motifs ou des schémas de comportement des ressources qui sont caractéristiques du dysfonctionnement desdites ressources. La détection de tels schémas de comportement dans les données de ressources permet de prédire une future anomalie de ressource.

La prédiction de l'anomalie de ressource est mise en œuvre au moyen d'un algorithme prédictif, par exemple basé sur des outils statistiques ou d'apprentissage automatique, tel que de l'apprentissage profond ou par renforcement. L'avantage d'utiliser l'apprentissage par renforcement est de permettre la détection de schémas de comportement encore non appris dans les données de ressources précédemment collectées.

Le programme de prédiction est donc configuré pour prédire la future défaillance si les données collectées par les sondes avant l'exécution de l'application 12 indiquent une tendance d'occurrence de l'anomalie.

Avantageusement, le programme de prédiction est également configuré pour analyser les données de ressources collectées durant l'exécution de l'application 12. Le programme de prédiction effectue donc une surveillance en continu du fonctionnement des ressources afin de détecter la tendance d'occurrence de l'anomalie dans ces données collectées en continu. Préférentiellement, la détection de la tendance d'occurrence de l'anomalie dans les données collectées durant l'exécution de l'application 12 est mise en œuvre au moyen de l'algorithme prédictif.

En conséquence, lorsque le programme de prédiction détecte la tendance d'occurrence de l'anomalie de ressource, il détermine la date de défaillance en fonction des occurrences précédentes de l'anomalie de ressource.

Alternativement, la date de défaillance est déterminée en fonction d'un nombre d'anomalies d'une ressource. En effet, une anomalie seule n'engendre pas nécessairement une défaillance de l'application 12. Dans certains cas, c'est une accumulation d'anomalies qui mène à ladite défaillance de l'application 12. Dans ce cas, le programme de prédiction est adapté pour détecter dans les données de ressources le nombre d'anomalies à partir duquel la défaillance aura lieu. En outre, le nombre d'anomalies peut croître au cours de l'utilisation de la ressource. Dans ce cas, le programme de prédiction peut informer de la future défaillance de l'application 12 par prédiction de l'évolution du nombre d'anomalies par l'algorithme prédictif. Avantageusement, le programme de prédiction peut tenir compte du nombre d'anomalies et prédire la date de défaillance par analyse et prédiction de l'évolution du nombre d'anomalies.

La collecte des données est mise en œuvre sur au moins une des ressources de la pluralité de ressources allouées à l'exécution de l'application 12. Similairement, l'analyse des données collectées peut être mise en œuvre sur au moins une des ressources de la pluralité de ressources allouées à l'exécution de l'application 12. En conséquence, l'anomalie de ressource est prédite pour au moins une des ressources de la pluralité de ressources allouées à l'exécution de l'application 12. L'estimation de la date de la défaillance peut donc être mise en œuvre à partir de la prédiction de l'anomalie d'au moins une des ressources de la pluralité de ressources allouées à l'exécution de l'application 12.

L'étape 102 est ensuite une étape de programmation du point de sauvegarde. Le point de sauvegarde est programmé pour se déclencher à un instant qui dépend d'une date de sauvegarde, préférentiellement avant la date de défaillance. En particulier, l'instant de déclenchement du point de sauvegarde peut être un instant précédant la date de défaillance. Par exemple, l'instant précédant la date de défaillance précède d'au moins une durée prédéterminée la date de la défaillance. La durée prédéterminée dépend d'un ou plusieurs facteurs tels que la durée d'exécution de l'application 12 ou encore la criticité des données obtenues par l'application 12. Par exemple la durée prédéterminée pourra être comprise, en fonction de l'application entre 1 minute et 10 heures. En outre, la durée prédéterminée peut être définie de sorte à tenir compte du délai nécessaire pour exécuter le point de sauvegarde avant la défaillance. Par exemple, si le temps nécessaire à l'exécution du point de sauvegarde est de 2 heures, alors la durée prédéterminée est au moins supérieure à 2 heures.

Avantageusement, le volume de données de ressources peut être connu à plusieurs instants d'exécution de l'application 12. Par exemple, le volume de données de ressources peut avoir été déterminé lors d'une exécution antérieure de l'application 12 durant laquelle le volume des données de ressources nécessaires à son exécution a été quantifié à plusieurs instants d'exécution, par exemple au moyen des sondes. Alternativement, le volume de données de ressources peut être estimé par l'opérateur, par un utilisateur de l'application 12 ou au moyen d'un calcul automatique adapté pour estimer le volume de données de ressources. Ainsi, l'instant de déclenchement peut être choisi de sorte à minimiser le volume de données sauvegardé durant le point de sauvegarde. Par exemple, l'instant de déclenchement peut être un des instants d'exécution de l'application 12, avant la date de défaillance, dont le volume de données de ressources est minimal. L'intérêt est de minimiser l'impact du mécanisme C/R sur la performance du calcul.

Le point de sauvegarde peut être un point de sauvegarde complet ou un point de sauvegarde partiel.

On entend par « point de sauvegarde complet » un point de sauvegarde utilisé pour sauvegarder, vers une mémoire dédiée distante ou locale, toutes les données qui sont utilisées par l'application 12 à l'instant de déclenchement et qui sont stockées dans une mémoire volatile et/ou non-volatile du nœud 11. Est également sauvegardé un état de l'ensemble des processus de l'application 12 en cours d'exécution à l'instant du déclenchement. L'intérêt du point de sauvegarde complet est que son déclenchement est transparent pour le nœud 11 et/ou pour une machine virtuelle accueillant l'exécution de l'application 12 sur le nœud 11, puisque la réalisation du point de sauvegarde est ici indépendante de l'application 12 en cours d'exécution. Lors de la restauration du calcul, au redémarrage de l'application 12, toutes les données utilisées par l'application 12 sont réécrites dans la mémoire temporaire du nœud 11 et les processus de l'application 12 sont restaurés dans l'état dans lequel ils se trouvaient à l'instant de déclenchement du point de sauvegarde. Le point de sauvegarde est, par exemple, mis en œuvre par un programme de point de sauvegarde, tel que le programme DMTCP^{™} (Distributed MultiThreaded CheckPointing) ou le programme CRIU^{™} (Checkpoint/Restore In Userspace). Le programme de point de sauvegarde, pour le déclenchement du point de sauvegarde, reçoit alors l'instant de déclenchement afin de programmer le point de sauvegarde. Il peut également recevoir la date de défaillance.

On entend par « point de sauvegarde partiel » un point de sauvegarde utilisé pour sauvegarder uniquement une partie des données qui sont utilisées par l'application 12 à l'instant de déclenchement et qui sont stockées dans une mémoire volatile et/ou non-volatile du nœud 11. En règle générale, la partie sauvegardée des données correspond à une fraction de 10 % du volume des données de la mémoire temporaire. Cette fraction de volume des données peut éventuellement être plus grande ou plus petite, en fonction de l'application 12 concernée, et peut, par exemple, être compris entre 5 % et 50 % du volume des données en mémoire. L'intérêt du point de sauvegarde partiel est qu'il nécessite de ne sauvegarder, et donc de ne restaurer, qu'un petit volume de données. Cependant, ce type de mécanisme C/R doit être natif dans l'application 12 exécutée, qui comprend donc des instructions dédiées au déclenchement du point de sauvegarde et à la restauration du calcul. Ceci implique également que l'application 12 a connaissance des données indispensables à son redémarrage et de celles qui ne le sont pas.

Avantageusement, le programme de prédiction fournit un indice de confiance quant à la date de défaillance prédite. En effet, la prédiction de la date de défaillance n'est pas certaine car elle est associée à une probabilité de réalisation de la défaillance. L'indice de confiance indique donc la fiabilité de la date de défaillance pour tenir compte de la probabilité de réalisation de la défaillance. L'indice de confiance est par exemple un pourcentage pour lequel, plus la valeur est élevée et plus la fiabilité de la prédiction est grande.

Le point de sauvegarde peut ainsi être programmé en fonction de l'indice de confiance. Préférentiellement, le point de sauvegarde est programmé si l'indice de confiance dépasse un seuil prédéfini. L'intérêt est, entre autres, de ne pas programmer le point de sauvegarde pour un faux-positif d'anomalie de ressource prédite. Ce seuil peut être prédéfini en fonction du contexte d'exécution de l'application 12, par exemple s'il s'agit d'un contexte de test, de déploiement ou de production, le seuil est prédéfini en fonction de connaissances métier et/ou de l'expérience de l'opérateur. Lorsque ce seuil est prédéfini, il est stocké dans une mémoire d'un nœud 11 exécutant l'application 12, d'un nœud 11 exécutant le programme de prédiction, d'un gestionnaire de point de sauvegarde 13, d'un gestionnaire de ressources 14, ou dans une mémoire distante. A titre d'exemple, pour réduire fortement l'impact du mécanisme de C/R sur la performance de calcul, le seuil prédéfini peut être de 90 %, ce qui correspond à une probabilité de 90 % d'occurrence de l'anomalie de ressource. Alternativement, un seuil prédéfini de 70 %, correspondant à une probabilité d'occurrence de 70 % de l'anomalie de ressource, permet de minimiser les risques quant à la perte du calcul en cours et de s'assurer que l'application 12 dispose d'un point de sauvegarde pour redémarrer.

Dans certains cas, la probabilité de l'anomalie de ressource croît avec le temps, par exemple en fonction des données de ressources collectées en continu. L'intérêt de l'indice de confiance est alors de permettre la programmation du point de sauvegarde lorsque la probabilité d'occurrence de l'anomalie de ressource est suffisamment haute et ainsi d'éviter des points de sauvegarde inutiles.

Avantageusement, le programme de prédiction fournit au moins un identifiant de ressource correspondant chacun à une ressource pour laquelle l'anomalie est prédite. L'intérêt est de connaître la nature de la ressource qui dysfonctionne, et éventuellement la nature de l'anomalie de ladite ressource.

Le point de sauvegarde peut ainsi être programmé en fonction dudit identifiant, notamment en fonction de la nature de la ressource dysfonctionnant et/ou de la nature de l'anomalie de ressource. En effet, ce n'est pas parce que la ressource dysfonctionne qu'elle provoquera la défaillance. Dans certains cas, l'anomalie de ressource concerne une ressource qui n'est pas utilisée par l'application 12 et ne provoquera pas la défaillance ; par exemple une carte graphique alors que l'application 12 utilise uniquement le processeur 11a et la mémoire temporaire 11b. Dans d'autres cas, la nature de l'anomalie de ressource ne provoquera pas la défaillance de l'application 12 ; par exemple un processeur qui surchauffe et dont la fréquence de calcul diminue de 5 % durant l'exécution de l'application 12 ne fera que diminuer la performance de calcul. Enfin, dans d'autres cas, l'anomalie de ressource concerne une ressource redondante, c'est-à-dire une ressource qui est disponible sur le nœud 11 en plusieurs exemplaires, possiblement identiques; par exemple, le disfonctionnement d'un port Ethernet, utilisé par l'application 12, et existant en deux exemplaires sur le nœud 11 ne provoquera pas la défaillance de l'application 12 puisque l'application 12 pourra commuter vers le second port Ethernet.

Dans ce cas, une liste des ressources est disponible et recense l'ensemble des ressources de l'infrastructure informatique 10. La liste de ressources est, par exemple, produite au moyen du gestionnaire de ressources 14. Une liste de règles est, en outre, disponible pour chaque application 12. Ces règles de la liste de règles indiquent une ou plusieurs conditions sur chaque ressource afin de définir si la ressource concernée est indispensable ou non-indispensable à l'exécution de l'application 12 sur le nœud 11 comprenant ladite ressource. Si elle est indispensable, alors l'anomalie de cette ressource entraînera la défaillance de l'application 12. Si elle n'est pas indispensable, l'anomalie de la ressource n'entraînera pas la défaillance de l'application 12. Par exemple, si l'application 12 requiert un port Ethernet pour fonctionner et que le nœud 11 exécutant l'application 12 comporte deux ports Ethernet, alors la ressource « port Ethernet » sera définie comme non-indispensable sur ce nœud 11 et pour cette application 12, puisque le second port Ethernet peut se substituer de façon transparente au premier port Ethernet. Au contraire, si l'application 12 requiert une carte graphique et que le nœud 11 ne comprend qu'une seule carte graphique, alors la ressource « carte graphique » sera définie comme indispensable sur ce nœud 11 et pour cette application 12. La liste de ressources et la liste de règles sont, par exemples, stockées sur une mémoire non-volatile du gestionnaire de ressources 14 ou sur la mémoire de stockage de données 15.

L'identifiant permet donc de déterminer si l'anomalie de ressource prédite provoquera la défaillance de l'application 12, auquel cas le point de sauvegarde est programmé. Inversement, si l'anomalie de ressource prédite ne provoquera pas la défaillance de l'application 12, le point de sauvegarde n'est pas programmé.

Par ailleurs, l'application 12 peut comprendre une pluralité de tâches d'exécutions. Ainsi, l'application 12 s'exécute suivant un plan d'exécution (en anglais « workflow ») instruisant d'exécuter séquentiellement, sur les nœuds 11 alloués, l'application 12 suivant la pluralité de tâches d'exécution. Dans ce cas, le programme de prédiction est adapté pour déterminer une tâche d'exécution de défaillance, durant l'exécution de laquelle l'anomalie de ressource est prédite. La date de défaillance correspond donc à un instant durant l'exécution de la tâche d'exécution de défaillance.

Le point de sauvegarde peut alors être programmé en fonction de la tâche d'exécution de défaillance. Plus particulièrement, le point de sauvegarde peut être programmé de sorte à se déclencher avant la tâche d'exécution de défaillance. Préférentiellement, le point de sauvegarde est programmé pour se déclencher à la tâche d'exécution qui précède, dans le plan d'exécution, la tâche d'exécution de défaillance. Par exemple, le point de sauvegarde peut se déclencher au début, durant ou à la fin de la tâche d'exécution précédant la tâche d'exécution de défaillance. L'intérêt est, à nouveau, de minimiser l'impact du point de sauvegarde sur la performance de calcul, notamment en s'assurant que le temps de calcul perdu est minimal.

Alternativement, le point de calcul peut être programmé pendant une tâche d'exécution pour laquelle le volume de données d'exécution à sauvegarder durant le point de sauvegarde est inférieur au volume de données d'exécution à sauvegarder pour la tâche d'exécution précédant la tâche d'exécution de défaillance. L'intérêt est alors de minimiser le coût du point de sauvegarde et son impact sur la performance de calcul.

L'étape 103 optionnelle est une étape de programmation d'une pluralité de points de sauvegarde fréquentiels, chacun déclenché à un instant de sauvegarde d'une pluralité d'instants de sauvegarde. Chaque point de sauvegarde fréquentiel est mis en œuvre à un instant postérieur au déclenchement du point de sauvegarde programmé à l'étape 102. La pluralité de points de sauvegarde fréquentiels est mise en œuvre lorsque la défaillance de l'application 12 n'a pas eu lieu à la date de défaillance prédite. De tels points de sauvegarde fréquentiels assurent qu'un point de sauvegarde a été déclenché au plus proche de la défaillance de l'application 12, ce qui permet de réduire le temps de calcul perdu par la défaillance.

La programmation de la pluralité de points de sauvegarde fréquentiels consiste alors à programmer les points de sauvegarde fréquentiels à partir de l'instant postérieur au point de sauvegarde programmé à l'étape 102. L'instant postérieur peut avoir lieu après une durée comprise entre 1 minute et 10 heures après le déclenchement du point de sauvegarde programmé, par exemple après 30 minutes. Les points de sauvegarde fréquentiels sont programmés de sorte à se déclencher successivement, en respectant un intervalle de déclenchement.

Avantageusement, cette durée peut être adaptée à l'application 12 en cours d'exécution et/ou à l'indice de confiance et/ou à l'identifiant de la ressource. En effet, la durée peut être courte si l'indice de confiance est élevé, par exemple inférieure à 30 minutes si l'indice de confiance est supérieur à 95 %, ou long si l'indice de confiance n'est pas élevé, par exemple supérieure à 30 minutes si l'indice de confiance est inférieur à 80 %. Par ailleurs, la durée peut être courte, par exemple inférieure à 30 minutes, si l'identifiant indique que l'anomalie de ressource concerne une ressource critique à l'exécution de l'application 12 ; inversement, la durée peut être longue, par exemple supérieure à 30 minutes, si la ressource concernée n'est pas critique. Par exemple, dans le cas d'une application 12 s'exécutant sur un processeur à partir de données reçues via un port Ethernet et stockées sur une mémoire vive, si l'identifiant indique que l'anomalie de ressource concerne le port Ethernet alors il ne s'agit pas d'une ressource critique et la durée peut être longue, par exemple supérieure à 30 minutes ; en effet, l'arrêt du port Ethernet empêche l'exécution des calculs mais les données du calcul et l'état du processeur sont conservés. Au contraire, si l'anomalie de ressource concerne l'alimentation du nœud 11, alors il s'agit d'une ressource critique et la durée peut être courte, par exemple inférieure à 30 minutes.

De la même façon que pour la durée, l'intervalle de déclenchement pour le déclenchement des points de sauvegarde fréquentiels successifs peut être adapté à l'application 12 en cours, à l'indice de confiance et/ou à l'identifiant de la ressource. Alternativement, l'intervalle de déclenchement peut être différent de la durée. L'intervalle de déclenchement peut, en outre, être un intervalle régulier.

Dans une alternative, l'intervalle de déclenchement n'est pas un intervalle régulier. Par exemple, la fréquence de déclenchement des points de sauvegarde fréquentiels successifs peut être augmentée ou diminuée après le déclenchement de chaque point de sauvegarde fréquentiel. Par ailleurs, l'intervalle de déclenchement peut suivre une loi prédéfinie par l'opérateur, en fonction de l'application 12 en cours, de l'indice de confiance, de l'identifiant de la ressource et/ou sur la base de ses connaissances métiers.

Alternativement, la programmation de la pluralité de points de sauvegarde fréquentiels est mise en œuvre de sorte qu'au moins un des points de sauvegarde fréquentiels se déclenche à chacune des tâches d'exécution postérieures à la tâche d'exécution à laquelle le point de sauvegarde a été déclenché. Par exemple, au moins un des points de sauvegarde fréquentiels peut être déclenché au début, durant ou à la fin de chacune des tâches d'exécution postérieures à la tâche d'exécution à laquelle le point de sauvegarde a été déclenché.

L'étape 101 de détermination de la date de défaillance de l'application selon le procédé 100 est mise en œuvre par un module de prédiction 16. Le module de prédiction 16 est donc adapté pour mettre en œuvre l'étape 101 du procédé 100. Dans ce cas, le module de prédiction 16 comprend des instructions qui, lorsqu'exécutées par un processeur, conduisent à la mise en œuvre de l'étape 101. Le module de prédiction 16 peut, en outre, être adapté pour mettre en œuvre le programme de prédiction. Le module de prédiction 16 peut alors comprendre des instructions qui, lorsqu'exécutées par un processeur, conduisent à la mise en œuvre du programme de prédiction. Le module de prédiction 16 peut également comprendre un processeur et une mémoire volatile.

Le module de prédiction 16 peut être compris dans l'infrastructure informatique 10, dans le gestionnaire de point de sauvegarde 13 ou dans le gestionnaire de ressources 14. Alternativement, le module de prédiction peut être extérieur à l'infrastructure informatique.

L'étape 102 de programmation du point de sauvegarde selon le procédé 100 est mise en œuvre par un module de programmation. Ce module de programmation est donc adapté pour mettre en œuvre l'étape 102 du procédé 100. Dans ce cas, le module de programmation comprend des instructions qui, lorsqu'exécutées par un processeur, conduisent à la mise en œuvre de l'étape 102. De la même façon, le module de programmation peut être adapté pour mettre en œuvre l'étape 103 de programmation d'une pluralité de points de sauvegarde fréquentiels selon le procédé 100, et comprendre des instructions qui, lorsqu'exécutées par un processeur, conduisent à la mise en œuvre de l'étape 103

Le module de programmation met en œuvre l'étape 102 et l'étape 103 via le gestionnaire de point de sauvegarde 13, le gestionnaire de ressources 14 ou l'application 12. Le module de programmation peut être compris dans l'infrastructure informatique 10 ou être extérieur à l'infrastructure informatique 10.

Le gestionnaire de point de sauvegarde 13 est configuré pour mettre en œuvre des points de sauvegarde, c'est-à-dire pour lancer des sauvegardes et pour s'assurer qu'un point de sauvegarde est effectivement programmé et qu'une sauvegarde est effectivement réalisée.

Le gestionnaire de ressources 14 est configuré pour surveiller le fonctionnement des ressources de l'infrastructure informatique 10 par la collecte des données de ressource, par exemple au moyen des sondes, et prévenir d'une détection d'une anomalie de ressource. Avantageusement, le gestionnaire de ressources 14 peut informer l'opérateur de l'anomalie prédite en indiquant la ressource identifiée, et optionnellement la date de l'anomalie. L'opérateur peut ensuite décider de mettre en œuvre une opération de maintenance, par exemple pour la réparation ou le remplacement de la ressource, afin de prévenir l'anomalie.

Lorsque le module de programmation a recours à l'application 12, l'application 12 contient des instructions qui, lorsqu'exécutées par un processeur, permettent la mise en œuvre de l'étape 102. Pour cela, l'application peut comprendre une boucle active, dite « handler » en anglais, qui reste en écoute d'un signal notifiant à l'application de programmer un point de sauvegarde. De façon similaire, l'application 12 peut être configurée pour mettre en œuvre l'étape 103 du procédé 100, par exemple parce qu'elle comprend des instructions qui, lorsqu'exécutées par un processeur, conduisent à la mise en œuvre de l'étape 103.

Le module de prédiction 16, le gestionnaire de point de sauvegarde 13, le gestionnaire de ressources 14 et les nœuds 11 de calcul communiquent entre eux via le réseau, et comprennent donc chacun un ou plusieurs moyens de communication tels qu'un module de connexion filaire ou non-filaire.

## Revendications

1. Procédé (100), mis en œuvre par ordinateur, de programmation d'un point de sauvegarde d'au moins une application (12) exécutée sur une infrastructure informatique (10), l'infrastructure informatique (10) comprenant une pluralité de ressources allouées à l'exécution de l'application, le procédé (100) comportant les étapes suivantes :
- Détermination (101) d'une date de défaillance de l'application (12) en fonction d'une prédiction d'une anomalie d'au moins une ressource de la pluralité de ressources ;
- Programmation (102) du point de sauvegarde en fonction de la date de défaillance.

2. Procédé (100) selon la revendication 1, dans lequel au moins un identifiant de ressource est en outre déterminé à l'étape de détermination (101) de la date de défaillance, chaque identifiant de ressource identifiant une ressource de la pluralité de ressources à l'origine de l'anomalie, et dans lequel le point de sauvegarde est en outre programmé en fonction de l'identifiant de ressource déterminé.

3. Procédé (100) selon l'une des revendication 1 ou 2, dans lequel un indice de confiance de prédiction est en outre déterminé à l'étape de détermination (101) de la date de défaillance, et dans lequel le point de sauvegarde est en outre programmé en fonction de l'indice de confiance déterminé.

4. Procédé (100) selon l'une des revendication 1 à 3, dans lequel le point de sauvegarde est programmé pour se déclencher à un instant précédant la date de défaillance, l'instant précédant la date de défaillance d'au moins une durée prédéterminée.

5. Procédé (100) selon l'une des revendication 1 à 4, dans lequel l'anomalie est prédite en fonction de données de ressources collectées via des sondes avant l'exécution de l'application (12).

6. Procédé (100) selon l'une des revendication 1 à 5, dans lequel l'anomalie est prédite en fonction de données de ressources collectées via des sondes au cours de l'exécution de l'application (12).

7. Procédé (100) selon l'une des revendication 1 à 6, dans lequel la prédiction de l'anomalie est mise en œuvre par une analyse d'une tendance d'occurrences d'anomalies, l'analyse étant une analyse statistique ou une analyse par apprentissage machine.

8. Procédé (100) selon l'une des revendication 1 à 7, dans lequel l'application (12) comprend une pluralité de tâches d'exécution et l'anomalie est prédite durant l'exécution d'au moins une tâche d'exécution parmi la pluralité de tâches d'exécutions.

9. Procédé (100) selon la revendication précédente, dans lequel le point de sauvegarde est programmé pour se déclencher à la fin de l'exécution de la tâche d'exécution précédant la tâche d'exécution de la pluralité de tâches d'exécution durant laquelle l'anomalie est prédite.

10. Procédé (100) selon l'une des revendications précédentes, dans lequel, après déclenchement du point de sauvegarde, un point de sauvegarde fréquentiel est programmé pour se déclencher à une pluralité d'instants de sauvegarde.

11. Infrastructure informatique (10) comprenant une pluralité de ressources allouées à l'exécution d'une application (12), et :
- Un module de prédiction (16) configuré pour mettre en œuvre l'étape de détermination (101) d'une date de défaillance de l'application (12) du procédé (100) selon l'une des revendications 1 à 10 ;
- Un module de programmation au moins configuré pour mettre en œuvre l'étape (102) de programmation du point de sauvegarde du procédé (100) selon l'une des revendications 1 à 10, via un gestionnaire de point de sauvegarde (13) de l'infrastructure informatique, un gestionnaire de ressources (14) de l'infrastructure informatique ou l'application (12).

12. Infrastructure informatique (10) selon la revendication 11, dans laquelle le module de programmation est en outre configuré pour mettre en œuvre la programmation (103) du point de sauvegarde fréquentiel du procédé (100) selon la revendication 10.

13. Produit-programme d'ordinateur comprenant des instructions qui, quand le programme est exécuté par un ordinateur, conduisent celui-ci à mettre en œuvre les étapes du procédé selon l'une quelconque des revendications 1 à 10.

14. Support d'enregistrement lisible par ordinateur comprenant des instructions qui, lorsqu'elles sont exécutées par un ordinateur, conduisent celui-ci à mettre en œuvre les étapes du procédé selon l'une quelconque des revendications 1 à 10.
